# EUROPÄISCHE PATENTSCHRIFT

(11) **EP 1 476 686 B1**
(45) Veröffentlichungstag und Bekanntmachung des Hinweises auf die Patenterteilung: **13.07.2005**
(21) Anmeldenummer: 03714640.4
(22) Anmeldetag: 19.02.2003
(51) Int. Cl.: F16K 31/08

(54) **ELEKTROMAGNETISCHES VENTIL**
ELECTROMAGNETIC VALVE
SOUPAPE ELECTROMAGNETIQUE

(30) Priorität: 19.02.2002 DE 10206778
(43) Veröffentlichungstag der Anmeldung: 17.11.2004
(73) Patentinhaber: AWECO APPLIANCE SYSTEMS GmbH & Co. KG, 88099 Neukirch (DE)
(72) Erfinder: OTT, Hubert, 88212 Ravensburg (DE); GRAU, Thomas, 88260 Argenbühl (DE)
(74) Vertreter: Roth, Klaus, Dr.
(86) Internationale Anmeldenummer: PCT/DE2003/000515
(87) Internationale Veröffentlichungsnummer: WO 2003/071175

(56) Entgegenhaltungen:
- US-A- 2 983 278

## Beschreibung

Die Erfindung betrifft ein elektromagnetisches Ventil nach dem Oberbegriff des Anspruchs 1.

Elektromagnetische, insbesondere bistabile Ventile, werden in vielfältigen Anwendungen, beispielsweise in Fluidkreisläufen von Haushaltsgeräten wie Kühlschränken, Kaffeemaschinen, aber auch in anderen Gebieten, beispielsweise auf dem Gebiet der Analytik oder der Medizintechnik eingesetzt.

In den meisten Anwendungsbereichen, wie beispielsweise dem Anwendungsbereich der Haushaltsgeräte, werden hierbei Ventile bevorzugt, die eine kompakte Bauweise aufweisen und darüber hinaus mit möglichst wenig Aufwand herzustellen und zu montieren sind. Um diesem Zweck gerecht zu werden, sind in der jüngsten vergangenheit verschiedene Entwicklungen bekannt geworden (vgl. DE 199 14 972 A1).

US 2 983 278 A offenbart ein elektromagnetischen Ventil mit zwei Schaltstellungen zwischen zwei Polschuhe. Zwischen die zwei Polschuche ist ein Führungsteil zur linearen Führung des Ventilkörpers eingesetzt.

Dieses Dokument entspricht den Oberbegriff des Anspruchs 1.

Ausgehend von Ventilen gemäß diesem Stand der Technik hat die Erfindung die Aufgabe, ein Ventil vorzuschlagen, das besonders geräuscharm ist.

Diese Aufgabe wird bei einem Ventil gemäß dem Oberbegriff des Anspruchs 1 durch dessen kennzeichnende Merkmale gelöst.

Durch die in den Unteransprüchen genannten Maßnahmen sind vorteilhafte Ausführungen und weiterbildungen der Erfindung möglich.

Dementsprechend zeichnet sich ein erfindungsgemäßes Ventil dadurch aus, dass wenigstens ein in das Ventilgehäuse eingesetztes Führungsteil zur linearen Führung des Ventilkörpers in axialer Richtung vorgesehen ist. Bislang war ein z.B. durch das Fluid verursachter exzentrischer Einschlag des ventilkörpers auf dem Ventilsitz möglich, wodurch sich ein erhöhter Verschleiß und eine stärkere Geräuschentwicklung ergab. Durch die erfindungsgemäße Führung ist nunmehr gewährleistet, dass der Ventilkörper in seiner gesamten Bewegung zentriert und achsenparallel bewegt wird. Infolgedessen erfolgt auch ein zentriertes Aufsetzen des Ventilkörpers auf dem Ventilsitz, wodurch eine Zentrierung beim Aufprall auf den Ventilsitz entfällt. Hieraus ergibt sich eine geringere Geräuschentwicklung sowie ein verminderter Verschleiß.

Weiterhin wird das Gehäuse des Ventils als Rohr ausgebildet, in das alle wesentlichen Ventilkomponenten einzusetzen sind. In einer besonders einfachen Ausführungsform der Erfindung beschränken sich diese Ventilelemente auf die Polschuhe, das Führungsteil gegebenenfalls mit Filter, sowie den Ventilkörper.

Ein solches Rohr, vorzugsweise in Form eines Zylinderrohrs, ist durch einfaches Ablängen aus einem handelsüblichen Rohrmaterial, beispielsweise aus Edelstahl, erhältlich und bietet darüber hinaus den Vorteil, dass es aufgrund seiner zylindrischen Form problemlos in das Innere einer Steuerspule einzufügen ist.

Zum dichten Abschluss der ventilkammer werden zweckmäßigerweise die Polschuhe nach dem Einfügen in das Zylinderrohr mit diesem verbunden, beispielsweise im Falle eines Edelstahlrohres bevorzugt verschweißt. Eine Verschweißung lässt sich von außen durch Laserschweißen bei hoher Dichtigkeit herstellen. Andere verbindungsformen, beispielsweise durch Verpressen oder dergleichen, sind jedoch an dieser Stelle ebenfalls denkbar.

Vorzugsweise wird das Führungsteil als Führungshülse ausgebildet. Ein hülsenförmiges Führungsteil ergibt eine umfangsseitig gute Führung an der Außenwand der ventilkammer. Ein hülsenförmiges Führungsteil ist demnach in radialer Richtung mit entsprechender Anpassung an die Innenkontur der Ventilkammer nach dem Einsetzen gut in radialer Richtung fixiert. Darüber hinaus kann mit einem hülsenförmigen Führungsteil am Innenumfang des Führungsteils eine gleichmäßige Führung des Ventilkörpers verwirklicht werden. Ein Verdrehen oder Verkanten des Ventilkörpers lässt sich mit Hilfe eines solchen Führungsteils weitgehend unterbinden.

In einer besonderen Ausführungsform der Erfindung, insbesondere bei einem hülsenförmigen Führungsteil, werden die Führungselemente als innere, radial abstehende Rippen ausgebildet. Derartige Führungselemente können bei der Fertigung des Führungsteil bereits in dieses eingeformt werden, so dass zusätzliche Bauelemente oder zusätzliche Bearbeitungsschritte nicht mehr erforderlich sind. Dies reduziert den Fertigungsaufwand für das Führungsteil erheblich. Darüber hinaus lässt sich mit derartigen Führungsrippen die gewünschte axiale Führung des Ventilkörpers über seine gesamte Bewegungslänge verwirklichen, wobei zugleich zwischen derartigen Rippen ein Durchlass für das Fluid und somit eine Verbindung zwischen den beiden Fluidleitungen ohne Beeinträchtigung durch das Führungsteil möglich ist.

Ein erfindungsgemäßes Führungsteil lässt sich in vorteilhafter Weise aus Kunststoff, z.B. durch Spritzgießen, fertigen. Hierdurch wird der Fertigungsaufwand äußerst gering, wobei durch geeignete Materialauswahl für das Führungsteil ohne weiteres eine Verwendung des Ventils auch für chemisch-aggressive Fluide oder unter thermischer Belastung denkbar ist.

In einer besonderen Ausführungsform wird weiterhin ein Abstandselement vorgesehen, das den Abstand der die Anschlagflächen für die Endstellungen des Ventilkörpers oder einen Ventilsitz aufweisenden Bauelemente, z.B. der Polschuhe, festlegt. Dieser Abstand ist für die Funktionsfähigkeit des Ventils von großer Bedeutung. Die genaue Lage der Endpositionen des Ventilkörpers in seinen verschiedenen Schaltstellungen ist für viele Ventileigenschaften von Bedeutung. So ist die Anzugskraft des Ventilkörpers auf den Ventilsitz abhängig von der Lage des Ventilsitzes im Bezug zur Form und Stärke des Magnetfeldes, das den Ventilkörper auf dem Ventilsitz hält.

Weiterhin ist der Abstand der Anschlagflächen des Ventilkörpers in seinen verschiedenen Schaltstellungen dahingehend von Bedeutung, dass hierdurch die Beschleunigungsstrecke und somit der Aufprallimpuls des Ventilkörpers beeinflusst wird. Schwankungen in dem Abstand können sich dementsprechend in unterschiedlichen Geräuschentwicklungen und verschleißerscheinungen des Ventils bemerkbar machen.

Auch für-den freien Strömungsquerschnitt bei geöffnetem Ventil ist der fragliche Abstand maßgebend.

Um bei der Montage des Ventils bezüglich dieses Abstandes möglichst geringe__Toleranzen zuzulassen, wird bislang ein beträchtlicher Fertigungsaufwand betrieben.

Durch die erfindungsgemäße Verwendung eines Abstandselementes, das zwischen die die Anschlagflächen oder den Ventilsitz für den Ventilkörper aufweisenden Bauelemente, z.B. zwischen den beiden Polschuhen im Bereich der Ventilkammer eingelegt wird, ist die Montage des Ventils erheblich vereinfacht. Die beiden Polschuhe bzw. die die Anschlagflächen oder den Ventilsitz für den Ventilkörper aufweisenden Bauelemente können auf Anschlag unter Verwendung des Abstandselementes zusammengefügt werden, wodurch sich eine klar definierte relative Position zueinander ergibt. Die Toleranz bei der Herstellung dieses Abstandes entspricht der Maßtoleranz des Abstandselementes.

Bevorzugt wird das Führungsteil so ausgebildet, dass ein Fluiddurchlass vorhanden ist. Dies sorgt für einen freien Fluiddurchfluss durch die Ventilkammer durch den Ventilsitz in eine erste, als Abfluss dienende Fluidleitung. Der Durchlass durch das Führungsteil stellt bei geöffneter Ventilstellung die Verbindung zwischen dieser Fluidleitung und einer zweiten dementsprechend als zulaufleitung dienenden Fluidleitung her.

Sowohl die erste als auch die zweite Fluidleitung werden bevorzugt als Bohrungen in den beiden Polschuhen angebracht, so dass sich auch hier weitere aufwändige konstruktive Maßnahmen erübrigen.

In einer besonderen Ausführungsform der Erfindung wird das Abstandselement hülsenförmig ausgebildet. Hieraus ergibt sich eine symmetrische Anschlagfläche für die anzufügenden Bauelemente, beispielsweise die Polschuhe.

Bevorzugt wird das Führungsteil zugleich als Abstandselement vorgesehen, so dass sich die Anzahl der benötigten Teile und somit der Fertigungsaufwand reduziert. Dies ist insbesondere bei hülsenförmiger Ausbildung des Führungsteils bzw. des Abstandselementes ohne weiteres möglich.

In einer besonderen Ausführungsform der Erfindung wird das Führungsteil mit einem Filterelement versehen. Durch ein solches Filterelement, das beispielsweise als Siebeinsatz ausgebildet werden kann, ist es möglich, Schmutzpartikel aus dem Bereich des Ventilsitzes und des Ventilkörpers fernzuhalten. Hierdurch wird zum einen eine dauerhafte Dichtfunktion und Druckfestigkeit und zum anderen ein geringerer Verschleiß und somit eine erhöhte Lebensdauer des Ventils gewährleistet.

Diese Ausführung ist vor allem beim Einsatz in geschlossenen Fluidkreisläufen von Vorteil, in denen das in dem geschlossenen Kreislauf befindliche Fluid einmal komplett durchgefiltert wird und anschließend keine weitere Schmutzfracht anfällt, die das Filterelement verstopfen kann. Das Filterelement muss in dieser Ausführungsform so dimensioniert sein, dass alle Schmutzpartikel, die beispielsweise bei der Montage des Ventils oder sonstigen Produktionsvorgängen entstehen können, ohne wesentliche Beeinträchtigung der Filterdurchlässigkeit herausgefiltert werden können.

Der Zufluss des Ventils wird bevorzugt durch eine exzentrisch angeordnete Bohrung in einem Polschuh realisiert, wodurch zugleich die Vorschaltung des Filterelementes in der Nähe des Außenumfangs der Ventilkammer möglich ist. Das Filter- bzw. Siebelement kann in diesem Fall scheibenförmig, z.B. als Ringscheibe, ausgebildet werden.

Ein erfindungsgemäßes Ventil wird bevorzugt als bistabiles Ventil ausgebildet, wozu wenigstens ein Permanentmagnet, in der bevorzugten Ausführungsform zwei Permanentmagnete vorzusehen sind, die den Ventilkörper in seiner jeweils angesteuerten Schaltstellung durch das permanente Magnetfeld halten. Der Ventilkörper wird zu diesem Zweck sowie auch zum Zwecke der Steuerung durch eine elektromagnetische Steuerspule zweckmäßigerweise wenigstens teilweise aus magnetischem oder magnetisierbarem Material hergestellt. Der bzw. die Permanentmagnete werden vorzugsweise als Ringmagnete ausgebildet, die ein umfangseitig gleich verteiltes drehsynmtetrisches Magnetfeld erzeugen und darüber hinaus gut in eine entsprechend zylindrisch ausgebildete Aufnahme ein- bzw. aufzusetzen sind.

Hierzu wird in einer besonderen Ausführungsform auf jedem Polschuh ein entsprechender zylindrischer Vorsprung ausgebildet, auf den ein Ringmagnet aufgeschoben werden kann. Hierdurch ist eine radiale Fixierung der Permanentmagnete vorgegeben. Die axiale Fixierung kann durch entsprechende Ausbildung des Führungsteils bzw. dessen Führungselemente bewerkstelligt werden, so dass die Gesamtmontage auch eines bistabilen Ventils besonders einfach erfolgen kann. In der beschriebenen Weiterbildung der Erfindung müssen lediglich die Polschuhe, der Ventilkörper, das Führungsteil, gegebenenfalls mit integriertem Filter, sowie die Permanentmagnete in ein Zylinderrohr eingeschoben und durch Befestigung der Polschuhe, z.B. durch Verschweißen, fixiert werden. Die so hergestellte Einheit kann anschließend als komplette Ventileinheit in eine Steuerspule eingesetzt werden, so dass sich die gewünschte kompakte Gesamteinheit ergibt.

Zur Fixierung der Permanentmagnete werden bevorzugt entsprechende Aufnahmen im Führungsteil angebracht, um durch Formschluss mit den Permanentmagneten die gewünschte definierte Position der Permanentmagnete zu bewirken. Eine solche Aufnahme kann in einer besonderen Ausführungsform in Form von beispielsweise stift- oder kegelartigen Erhöhungen vorgesehen werden, die für den Formschluss mit den Permanentmagneten sorgen. Der Formschluss kann darüber hinaus durch eine verformbare, insbesondere elastisch verformbare Ausbildung einer solchen Aufnahme verbessert werden.

Für den Ventilkörper bzw. den Ventilsitz hat sich eine wenigstens teilweise sphärische Form bewährt, in der bevorzugten Ausführung der Erfindung wird demnach ein Ventilkörper verwendet, der eine Kugel umfasst, deren Durchmesser an einen sphärisch ausgebildeten Ventilsitz angepasst ist. Durch die sphärische Form des Ventilsitzes und der Kugel ergibt sich bereits bei kleinem Hub des Ventilkörpers ein öffnungsspalt mit vergleichsweise großem Querschnitt.

In einer besonders vorteilhaften Weiterbildung dieser Ausführungsform wird der Ventilkörper selbst als Kugel, beispielsweise als Stahlkugel gewählt. Diese Ausführungsform bietet den Vorteil eines Ventilkörpers mit optimaler Passform an einen sphärischen Ventilsitz bei sehr geringer Masse. Die geringe Masse sorgt für eine geringere Impulseinwirkung auf den Ventilsitz beim Schalten des Ventils und somit für einen geringeren Verschleiß sowie eine kleinere Geräuschentwicklung.

Ein erfindungsgemäßes Ventil kann als sogenanntes 2/2-Ventil ausgebildet werden, wobei in diesem Fall die beschriebenen zwei Fluidleitungen vorgesehen werden. Die beiden Schaltzustände des Ventils definieren hierbei einen offenen Ventilzustand, bei dem der Ventilkörper vom Ventilsitz abgehoben und somit die beiden Fluidleitungen miteinander verbunden sind. Im geschlossenen ventilzustand hingegen liegt der Ventilkörper am Ventilsitz auf, so dass die Fluidverbindung unterbrochen ist.

Ein erfindungsgemäßes Ventil kann auch als sogenanntes 3/2-Ventil ausgestaltet werden. Hierbei ist eine dritte Fluidleitung sowie ein zweiter Ventilsitz vorzusehen.

Die beiden Abflussleitungen werden in diesem Fall bevorzugt durch zentrische Bohrungen in den Polschuhen angebracht, wobei auf der dem Ventilkörper zuweisenden Seite jeweils ein Ventilsitz am Polschuh angebracht, bevorzugt in diesen eingeformt wird. Die zentrische Anordnung der Abflussleitungen ermöglicht die-zentrierte Lage des Ventilkörpers und somit eine gleichmäßige drehsymmetrische Einwirkung von Ringmagneten einerseits als auch der außen befindlichen Steuerspule andererseits.

Der Außenanschluss der beiden Fluidleitungen wird in einer besonders vorteilhaften Ausführungsform dadurch hergestellt, dass am ausgangseitigen Ende der als Fluidleitung dienenden -Bohrungen der Polschuhe-Rohrleitungen eingesetzt und dort verbunden, beispielsweise verlötet, werden.

Ein Ausführungsbeispiel der Erfindung ist in der Zeichnung dargestellt und wird anhand der Figuren nachfolgend näher erläutert.

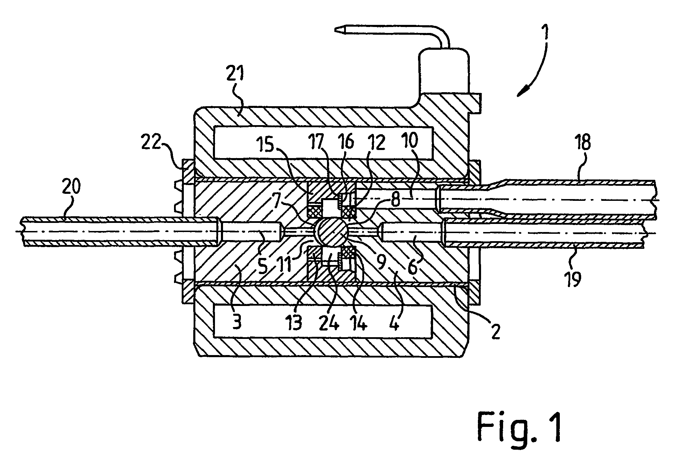

Im Einzelnen zeigen
- Fig. 1: einen Längsschnitt durch ein erfindungsgemäßes 3/2-Ventil und
- Fig. 2: eine perspektivische Darstellung eines erfindungsgemäßen Führungsteils.

Das Ventil 1 umfasst ein als Zylinderrohr ausgebildetes Ventilgehäuse 2, in das zwei Polschuhe 3, 4 eingesetzt sind. In den Polschuhen 3, 4 ist jeweils eine Bohrung 5, 6 angebracht, die als Fluidleitungen dienen. Die Fluidleitungen 5, 6 münden in zwei Ventilsitze 7, 8, die sphärisch geformt und somit an die Form eines als Kugel ausgebildeten Ventilkörpers 9 angepasst sind. Im dargestellten Schaltzustand schließt der Ventilkörper 9 den Ventilsitz 8.

Im Polschuh 4 ist neben der zentrischen Bohrung 6 eine weitere exzentrische Bohrung 10 angebracht, die als Zufluss für das Fluid dient.

Die beiden Polschuhe 3, 4 sind mit zylindrischen Vorsprüngen 11, 12 in Form von Querschnittsverjüngungen versehen, auf die zwei Ringmagnete 13, 14 aufgesetzt sind. Die Ringmagnete 13, 14 schließen in etwa bündig mit den Polschuhen 3, 4 bzw. den Ventilsitzen 7, 8 ab.

Eine erfindungsgemäße Führungshülse 15 ist zwischen die Polschuhe eingesetzt. Sie dient zugleich als Abstandselement und definiert so exakt den-Abstand zwischen den Polschuhen 3, 4 bzw. den ventilsitzen 7, 8 und somit auch den freien Strömungsquerschnitt bei geöffnetem Ventil. Ein Sieb 16 ist als Ringscheibe ausgebildet und in die Führungshülse 15 eingelegt, die hierzu mit einer Schulter 17 versehen ist.

Die Polschuhe 3, 4 sind auf nicht näher dargestellte Weise mit dem Ventilgehäuse 2 verbunden, in der Edelstahlversion geschweißt, vorzugsweise von außen lasergeschweißt.

Anschlussrohre 18, 19, 20 sind in die Bohrungen 5, 6 und 10 eingesetzt, die zu diesem Zweck endseitig etwas verbreitert sind. Die Anschlussrohre 18, 19, 20 sind dicht mit den Polschuhen 3, 4 verbunden, z.B. verlötet.

Das gesamte Ventil ist in eine Steuerspule 21 eingesetzt und stirnseitig über ein Jochblech 22, das als Kastenjoch oder in U-Form ausgebildet sein kann, fixiert, indem das Ventilgehäuse 2 und teilweise die Polschuhe 3, 4 an dem Jochblech 22 anliegen.

Die Montage des Ventils ist denkbar einfach. Die verschiedenen Ventilkomponenten, d.h. die Polschuhe 3, 4, der Ventilkörper 9 mit aufgesetzten Ringmagneten 13, 14 sowie die Führungshülse 15 werden in das Gehäuse formschlüssig eingeführt und dort verschweißt. Die Anschlussrohre 18, 19, 20 werden bevorzugt vor dem Verschweißen in den Polschuhen 3, 4 angebracht. Somit ist das Ventil fertiggestellt und muss zur Montage nur noch in die Steuerspule 21 eingesetzt und mittels der Jochbleche 22 fixiert werden.

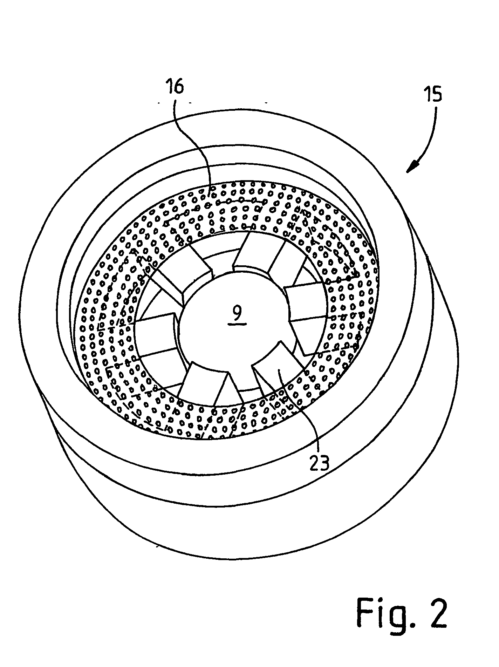

Die perspektivische Darstellung gemäß Fig. 2 der Führungshülse 15 mit eingesetztem Ventilkörper 9 zeigt Führungsrippen 23, die radial nach innen abstehen und die den Ventilkörper 9 bildende Kugel in ihrer Linearbewegung entlang der Ventilachse führen. Weiterhin ist in dieser Darstellung das Sieb 16 erkennbar, dass in die Führungshülse 15 eingelegt ist. Die Führungsrippen 23 bilden zugleich einen Durchlass für das Fluid von der als Zufluss dienenden exzentrischen Bohrung 10 im Polschuh 4 in die Ventilkammer 24, in der sich der Ventilkörper 9 befindet. Somit ist über die Führungsrippen 23 je nach Schaltstellung des Ventils auch der Durchlass zu den Abflüssen 5, 6 über die Ventilsitze 7, 8 gewährleistet. Der Ringmagnet 14 sorgt hierbei für den inneren Abschluss des Zuflusses 10 im Bereich des Siebs 16, so dass sichergestellt ist, dass das Fluid aus der Bohrung 10 stets das Sieb 16 passieren muss, um ins Innere der Ventilkammer 24 zu gelangen.

Die Führungshülse 15, die das Sieb 16 trägt, dient zum einen zur exakten Einstellung des Abstands der Polschuhe 3, 4 bzw. deren Ventilsitze 7, 8 und zum anderen über die Führungsrippen 23 für eine gute Axialführung des kugelförmigen Ventilkörpers 9. Die Montage wird durch die Verwendung der auch als Abstandselement dienenden Führungshülse 15 erheblich vereinfacht. Durch die Führungsrippen 23 wird der Geräuschpegel beim Betrieb des Ventils reduziert.

Darüber hinaus ist in der vorliegenden Ausführungsform aufgrund der kugelförmigen Ausgestaltung des Ventilkörpers 9 sowie der korrespondierenden sphärischen Form der ventilsitze 7, 8 nur ein geringer Schaltweg des Ventilkörpers 9 erforderlich, um einen Spalt zwischen Ventilsitz 7 bzw. 8 und dem Ventilkörper 9 zu erzeugen, der einen ausreichenden Strömungsquerschnitt bietet.

Durch die kurzen Schaltwege des Ventilkörpers 9 wird wiederum die Geräuschentwicklung reduziert. Durch das Anbringen der Ringmagnete in unmittelbare Nähe des Ventilsitzes können diese kleiner dimensioniert werden und dennoch einen ausreichend hohen Anpressdruck des Ventilkörpers 9 auf den jeweiligen Ventilsitz 7, 8 erzeugen.

Durch die Kugelform ist zudem ein Ventilkörper 9 mit sehr geringer Masse verwendbar, so dass die Geräuschentwicklung und der Verschleiß beim Aufprall auf dem jeweiligen Ventilsitz 7, 8 deutlich reduziert ist. Hierdurch wird auch die Herstellung der Ventilsitze 7, 8 erleichtert, da diese mit geringerer Härte verwendet werden können. Darüber hinaus sind Stahlkugeln mit ausreichender Güte kostengünstig im Handel erhältlich.

Über das Sieb 16 wird gewährleistet, dass keine Schmutzpartikel in den Bereich der Ventilsitze 7, 8 gelangen können, so dass die Dichtfunktion verbessert und der Verschleiß reduziert wird. Darüber hinaus werden magnetische oder magnetisierbare Partikel aus dem Fluidstrom auch an dem in der Strömung stehenden Permanentmagneten 14 festgehalten.

Über die Ringmagnete 13, 14 ergibt sich eine bistabile Ausführung des Ventils. Bei Verwendung geeigneter Permanentmagnete können diese mit ausreichender chemischer und thermischer Resistenz bereitgestellt werden, um einen Betrieb auch unter schweren Einsatzbedingungen, beispielsweise bei hohen Temperaturen oder mit chemischaggressiven Fluiden zu ermöglichen. Zum Umschalten der Schaltposition ist bei dieser bistabilen Ausführungsform lediglich ein kurzer Steuerimpuls über die Steuerspule 21 erforderlich, um die Schaltstellung zu wechseln, so dass das Ventil 1 insgesamt nicht nur eine mit wenig Aufwand herstellbare kompakte Ventileinheit bildet, sondern darüber hinaus auch sehr stromsparend ist.

### Bezugszeichenliste:

- 1: Ventil
- 2: Ventilgehäuse
- 3: Polschuh
- 4: Polschuh
- 5: Bohrung
- 6: Bohrung
- 7: Ventilsitz
- 8: Ventilsitz
- 9: Ventilkörper
- 10: Bohrung
- 11: Vorsprung
- 12: Vorsprung
- 13: Ringmagnet
- 14: Ringmagnet
- 15: Führungshülse
- 16: Sieb
- 17: Schulter
- 18: Anschlussrohr
- 19: Anschlussrohr
- 20: Anschlussrohr
- 21: Steuerspule
- 22: Jochblech
- 23: Führungsrippen
- 24: Ventilkammer

## Patentansprüche

1. Ventil (1) mit zwei Polschuhen (3,4), wobei wenigstens ein Polschuh (3) mit einer ersten Fluidleitung (5) und einem ersten Ventilsitz (7) versehen ist, wobei die Fluidleitung (5) über den Ventilsitz (7) mit einer Ventilkammer (24) verbunden ist, in der ein Ventilkörper (9) zwischen wenigstens zwei Schaltstellungen bewegbar ist, und wobei wenigstens ein in das Ventilgehäuse eingesetztes Führungsteil (15) zur linearen Führung des ventilkörpers (9) in axialer Richtung zwischen den Schaltstellungen vorgesehen ist, **dadurch gekennzeichnet, dass** die Polschuhe (3, 4) sowie das Führungsteil (15) in ein rohrförmiges Ventilgehäuse (2) eingesetzt sind.

2. Ventil nach Anspruch 1, **dadurch gekennzeichnet, dass** das Führungsteil als Führungshülse (15) mit Führungselementen (23) ausgebildet ist.

3. Ventil nach einem der vorgenannten Ansprüche **dadurch gekennzeichnet, dass** Führungselemente (23) als innere radiale Rippen an der Führungshülse (15) ausgebildet sind.

4. Ventil nach einem der vorgenannten Ansprüche **dadurch gekennzeichnet, dass** das Führungsteil (15) einen Fluiddurchlass aufweist.

5. Ventil nach einem der vorgenannten Ansprüche **dadurch gekennzeichnet, dass** das Führungsteil (15) wenigstens teilweise aus Kunststoff gefertigt ist.

6. Ventil nach einem der vorgenannten Ansprüche **dadurch gekennzeichnet, dass** wenigstens ein Abstandselement (15) im Bereich der Ventilkammer (24) vorhanden ist, das den Abstand des Ventilsitzes (7) von einer weiteren Anschlagfläche (8) für den ventilkörper (9) bestimmt.

7. Ventil nach einem der vorgenannten Ansprüche **dadurch gekennzeichnet, dass** das Abstandselement (15) hülsenförmig ausgebildet ist.

8. Ventil nach einem der vorgenannten Ansprüche **dadurch gekennzeichnet, dass** das Führungsteil (15) als Abstandselement ausgebildet ist.

9. Ventil nach einem der vorgenannten Ansprüche **dadurch gekennzeichnet, dass** das Führungsteil (15) mit einem Filterelement (16) versehen ist.

10. Ventil nach einem der vorgenannten Ansprüche **dadurch gekennzeichnet, dass** die zweite Fluidleitung (10) als exzentrische Bohrung in einem Polschuh (4) ausgebildet ist.

11. Ventil nach einem der vorgenannten Ansprüche **dadurch gekennzeichnet, dass** wenigstens ein Permanentmagnet (13, 14) vorgesehen ist.

12. Ventil nach einem der vorgenannten Ansprüche **dadurch gekennzeichnet, dass** der Permanentmagnet (13, 14) innerhalb des rohrförmigen Ventilgehäuses (2) angeordnet sind.

13. Ventil nach einem der vorgenannten Ansprüche **dadurch gekennzeichnet, dass** der Permanentmagnet (13, 14) als Ringmagnet ausgebildet ist.

14. Ventil nach einem der vorgenannten Ansprüche **dadurch gekennzeichnet, dass** der Permanentmagnet (13, 14) auf einem durch eine Querschnittsverjüngung gebildeten Vorsprung (11, 12) eines Polschuhs (3, 4) aufgesetzt ist.

15. Ventil nach einem der vorgenannten Ansprüche **dadurch gekennzeichnet, dass** das Führungsteil (15) mit einer Aufnahme für einen Permanentmagneten (13, 14) versehen ist.

16. Ventil nach Anspruch. 16, **dadurch gekennzeichnet, dass** die Aufnahme Erhöhungen umfasst, die den Formschluss des Führungsteils (15) mit wenigstens einem Permanentmagneten bewirken.

17. Ventil nach Anspruch 17, **dadurch gekennzeichnet, dass** die Erhöhungen verformbar sind.

18. Ventil nach Anspruch 18, **dadurch gekennzeichnet, dass** die Erhöhungen elastisch sind.

19. Ventil nach einem der vorgenannten Ansprüche **dadurch gekennzeichnet, dass** das rohrförmige Ventilgehäuse (2) in eine Steuerspule (21) eingesetzt ist.

20. Ventil nach einem der vorgenannten Ansprüche **dadurch gekennzeichnet, dass** der Ventilkörper (9) eine Kugel umfasst und der Ventilsitz (7, 8) wenigstens teilweise sphärisch geformt ist.

21. Ventil nach einem der vorgenannten Ansprüche **dadurch gekennzeichnet, dass** der Ventilkörper (9) eine Kugel ist.

22. Ventil nach einem der vorgenannten Ansprüche **dadurch gekennzeichnet, dass** Außenanschlussrohre (18, 19, 20) für die Fluidführung in wenigstens einem Polschuh (3, 4) angebracht sind.

23. Ventil nach einem der vorgenannten Ansprüche **dadurch gekennzeichnet, dass** eine dritte Fluidleitung (6) und ein zweiter Ventilsitz (8) zur Bildung eines sogenannten 3/2-Ventils vorgesehen ist.

## Claims

1. Valve (1) with two pole shoes (3, 4), wherein at least one pole shoe (3) is provided with a first fluid line (5) and a first valve seat (7), the fluid line (5) being connected via the valve seat (7) to a valve chamber (24), in which a valve body (9) can be moved between at least two switching positions, and wherein at least one guide part (15) inserted into the valve housing is provided for linear guidance of the valve body (9) in the axial direction between the switching positions, **characterised in that** the pole shoes (3, 4) and the guide part (15) are inserted into a tubular valve housing (2).

2. Valve according to claim 1, **characterised in that** the guide part is formed as a guide sleeve (15) with guide elements (23).

3. Valve according to any one of the preceding claims, **characterised in that** guide elements (23) are formed as inner radial ribs on the guide sleeve (15).

4. Valve according to any one of the preceding claims, **characterised in that** the guide part (15) has a fluid passage.

5. Valve according to any one of the preceding claims, **characterised in that** the guide part (15) is at least partially produced from plastics material.

6. Valve according to any one of the preceding claims, **characterised in that** at least one spacer element (15) is available in the region of the valve chamber (24) and determines the spacing of the valve seat (7) from a further stop face (8) for the valve body (9).

7. Valve according to any one of the preceding claims, **characterised in that** the spacer element (15) is sleeve-shaped.

8. Valve according to any one of the preceding claims, **characterised in that** the guide part (15) is formed as a spacer element.

9. Valve according to any one of the preceding claims, **characterised in that** the guide part (15) is provided with a filter element (16).

10. Valve according to any one of the preceding claims, **characterised in that** the second fluid line (10) is formed as an eccentric hole in a pole shoe (4).

11. Valve according to any one of the preceding claims, **characterised in that** at least one permanent magnet (13, 14) is provided.

12. Valve according to any one of the preceding claims, **characterised in that** the permanent magnet (13, 14) is arranged inside the tubular valve housing (2).

13. Valve according to any one of the preceding claims, **characterised in that** the permanent magnet (13, 14) is formed as an annular magnet.

14. Valve according to any one of the preceding claims, **characterised in that** the permanent magnet (13, 14) is placed on a projection (11, 12) of a pole shoe (3, 4) formed by a cross-sectional tapering.

15. Valve according to any one of the preceding claims, **characterised in that** the guide part (15) is provided with a receiver for a permanent magnet (13, 14).

16. Valve according to claim 16, **characterised in that** the receiver comprises elevations which bring about the positive fit of the guide part (15) with at least one permanent magnet.

17. Valve according to claim 17, **characterised in that** the elevations are deformable.

18. Valve according to claim 18, **characterised in that** the elevations are elastic.

19. Valve according to any one of the preceding claims, **characterised in that** the tubular valve housing (2) is inserted into a control coil (21).

20. Valve according to any one of the preceding claims, **characterised in that** the valve body (9) comprises a sphere and the valve seat (7, 8) is at least partially spherically formed.

21. Valve according to any one of the preceding claims, **characterised in that** the valve body (9) is a sphere.

22. Valve according to any one of the preceding claims, **characterised in that** outer connecting tubes (18, 19, 20) for the fluid guidance are provided in at least one pole shoe (3, 4).

23. Valve according to any one of the preceding claims, **characterised in that** a third fluid line (6) and a second valve seat (8) are provided to form a so-called 3/2-way valve.

## Revendications

1. Vanne (1) avec deux épanouissements polaires (3, 4), au moins un épanouissement polaire étant muni d'une première conduite de fluide (5) et d'un premier siège de vanne (7), la conduite de fluide (5) étant reliée par l'intermédiaire du siège de vanne (7) à une chambre de vanne (24) dans laquelle un corps de vanne (9) est mobile entre au moins deux positions de commutation, et au moins une pièce de guidage (15) insérée dans le boîtier de vanne étant prévue pour guider linéairement le corps de vanne (9) dans la direction axiale entre les positions de commutation,
**caractérisée en ce que** les épanouissements polaires (3, 4), ainsi que la pièce de guidage (15), sont insérés dans un boîtier de vanne tubulaire (2).

2. Vanne selon la revendication 1,
**caractérisée en ce que** la pièce de guidage est conçue comme une douille de guidage (15) avec des éléments de guidage (23).

3. Vanne selon l'une des revendications précédentes,
**caractérisée en ce que** des éléments de guidage (23) sont conçus comme des nervures radiales intérieures sur la douille de guidage (15).

4. Vanne selon l'une des revendications précédentes,
**caractérisée en ce que** la pièce de guidage (15) présente un passage de fluide.

5. Vanne selon l'une des revendications précédentes,
**caractérisée en ce que** la pièce de guidage (15) est réalisée au moins en partie en matière plastique.

6. Vanne selon l'une des revendications précédentes,
**caractérisée en ce qu'**il est prévu dans la zone de la chambre de vanne (24) au moins un élément d'écartement (15) qui détermine l'écart entre le siège de vanne (7) et une autre surface de butée (8) pour le corps de vanne (9).

7. Vanne selon l'une des revendications précédentes,
**caractérisée en ce que** l'élément d'écartement (15) est conçu en forme de douille.

8. Vanne selon l'une des revendications précédentes,
**caractérisée en ce que** la pièce de guidage (15) est conçue comme un élément d'écartement.

9. Vanne selon l'une des revendications précédentes,
**caractérisée en ce que** la pièce de guidage (15) est munie d'un élément filtrant (16).

10. Vanne selon l'une des revendications précédentes,
**caractérisée en ce que** la deuxième conduite de fluide (10) est conçue comme un perçage excentré dans un épanouissement polaire (4).

11. Vanne selon l'une des revendications précédentes,
**caractérisée en ce qu'**il est prévu au moins un aimant permanent (13, 14).

12. Vanne selon l'une des revendications précédentes,
**caractérisée en ce que** les aimants permanents (13, 14) sont agencés à l'intérieur du boîtier de vanne tubulaire (2).

13. Vanne selon l'une des revendications précédentes,
**caractérisée en ce que** l'aimant permanent (13, 14) est conçu comme un aimant annulaire.

14. Vanne selon l'une des revendications précédentes,
**caractérisée en ce que** l'aimant permanent (13, 14) est posé sur une saillie (11, 12) d'un épanouissement polaire (3, 4) formée par un rétrécissement de section.

15. Vanne selon l'une des revendications précédentes,
**caractérisée en ce que** la pièce de guidage (15) est munie d'un logement pour un aimant permanent (13, 14).

16. Vanne selon la revendication 15,
**caractérisée en ce que** le logement comporte des élévations qui provoquent l'assemblage par correspondance de forme de la pièce de guidage (15) avec au moins un aimant permanent.

17. Vanne selon la revendication 16,
**caractérisée en ce que** les élévations sont déformables.

18. Vanne selon la revendication 17,
**caractérisée en ce que** les élévations sont élastiques.

19. Vanne selon l'une des revendications précédentes,
**caractérisée en ce que** le boîtier de vanne tubulaire (2) est inséré dans une bobine de commande (21).

20. Vanne selon l'une des revendications précédentes,
**caractérisée en ce que** le corps de vanne (9) comporte une bille et le siège de vanne (7, 8) est au moins en partie de forme sphérique.

21. Vanne selon l'une des revendications précédentes,
**caractérisée en ce que** le corps de vanne (9) est une bille.

22. Vanne selon l'une des revendications précédentes,
**caractérisée en ce que** des tuyaux de raccordement extérieurs (18, 19, 20) pour le guidage de fluide sont montés dans au moins un épanouissement polaire (3, 4).

23. Vanne selon l'une des revendications précédentes,
**caractérisée en ce qu'**une troisième conduite de fluide (6) et un deuxième siège de vanne (8) sont prévus pour former une vanne 3/2.
